# EUROPÄISCHE PATENTSCHRIFT

(11) **EP 0 522 386 B1**
(45) Veröffentlichungstag und Bekanntmachung des Hinweises auf die Patenterteilung: **01.03.1995**
(21) Anmeldenummer: 92110908.8
(22) Anmeldetag: 27.06.1992
(51) Int. Cl.: G01F 1/68, G01F 5/00

(54) **Luftmassenstrommesser**
Air mass flow meter
Débitmètre massique d'air

(30) Priorität: 05.07.1991 DE 4122295
(43) Veröffentlichungstag der Anmeldung: 13.01.1993
(73) Patentinhaber: PIERBURG GMBH, 41460 Neuss (DE)
(72) Erfinder: Lösing, Karl-Heinrich, Dr.-Ing., W-4234 Alpen (DE); Witkowski, Peter, W-4053 Jüchen 1 (DE)

(56) Entgegenhaltungen:
- EP-A- 0 295 647
- DE-C- 2 911 631
- FR-A- 2 439 388
- FR-A- 2 635 182
- US-A- 4 856 328

## Beschreibung

Die Erfindung betrim einen Luftmassenstrommesser in der Luftansaugleitung einer Brennkraftmaschine nach dem Oberbegriff des Patentanspruchs 1.

Ein derartiger Luftmassenstrommesser ist beispielsweise in der EP-A-0295647 dargestellt und beschrieben, wobei dieser ein Venturirohr aufweist, das einstückig mit einem Rohrgehäuse ausgeführt und über Rippen zentrisch in einem Kanalabschnitt des Rohrgehäuses gehalten ist, wobei eine dieser Rippen hohl ausgeführt ist und in die so gebildete Ausnehmung ein Formstück eingeschoben ist, das als Hitzdraht ausgeführte temperaturabhängige Widerstände der prinzipiell bekannten Meßanordnung aufweist.

Aus der US-A-4,856,328 ist eine ähnliche Anordnung zur Messung der Ansaugluft von Brennkraftmaschinen bekannt, bei der auf einem plattenförmigen Keramiksubstrat ein in den Luftstrom ragender Widerstand angeordnet ist.

Aus der FR-A-2635182 ist eine Vorrichtung zur Halterung von Dünnschichtwiderständen auf einem elektrisch isolierenden Träger bekannt, bei der die Bauteile in einer Ebene in Strömungsrichtung liegen, wobei diese parallel angeordnet sind.

Ein ähnlicher Luftmassenstrommesser ist beispielsweise in der DE-C2 29 11 631 dargestellt und beschrieben, wobei dieser eine Montageplatte für die elektrische Regeleinrichtung aufweist, die zusammen mit einem in den Luftansaugkanal ragenden Sondenring mit einem Einsatzkörper verbunden ist, der in eine Montageöffnung des Rohrkörpers von außen steckbar und befestigbar ist. Der Sondenring nimmt dabei in seinem Inneren als Hitzdraht ausgeführte temperaturabhängige Widerstände der prinzipiell bekannten Meßanordnung auf.

Aus der DE-A1 36 06 851 ist eine Anordnung zur Messung der Ansaugluft von Brennkraftmaschinen bekannt, bei der auf einem plattenförmigen Mittelteil eines in den Luftstrom ragenden Trägers Widerstandsschichten angeordnet sind.

Die vorliegende Erfindung bezieht sich auf einen Luftmassenstrommesser, dessen Widerstände aus sogenannten Halbleiterchips gebildet sind, die als Massenware bezogen werden können. Es hat sich gezeigt, daß die Verwendung dieser Chips bei den behandelten Einrichtungen Exemplarstreuungen hervorruft, und zwar dadurch, daß gegenüber einem Hitzdraht beispielsweise, der in jeder Winkelstellung die gleiche Anströmung durch die Luft erfährt, bei dem als Quader ausgeführten Chip die Anströmung schon bei geringster abweichender Ausrichtung zum Luftstrom variiert und unterschiedliche Stellgrößen der Regelung bewirkt, die der Verwendung dieser Chips für den angegebenen Zweck bisher entgegenstanden.

Hiervon ausgehend stellt sich die Aufgabe, einen gattungsgemäßen Luftmassenstrommeser derart zu gestalten, daß eine wirtschaftliche Großserienfertigung und gleichzeitig ein fehlerfreier Betrieb des Luftmassenstrommessers bei Verwendung von Halbleiterchips erreicht wird. Darüber hinaus sollen eine lange Betriebsdauer und ein Betrieb der Einrichtung ohne größere Störwirkungen auf andere elektrische/elektronische Geräte ermöglicht werden.

Diese Aufgabe ist mit den kennzeichnenden Merkmalen des Patentanspruchs 1 gelöst worden, wobei vorteilhafte Weiterbildungen mit den Unteransprüchen angegeben sind.

Ein Ausführungsbeispiel der Erfindung ist in der Zeichnung dargestellt und wird nachfolgend mit Angabe erreichbarer Vorteile beschrieben.

Diese zeigt:
**Fig. 1** den erfindungsgemäßen Luftmassenstrommesser im Querschnitt;
**Fig. 2** in der Druntersicht ohne Rohrgehäuse- und Kammerdeckel;
**Fig. 3 und 4** einen Chipträger als Einzelteil;
**Fig. 5** einen Blechdeckel mit Kontaktstiften;
**Fig. 6** den Kammerdeckel in Seitenansicht;
**Fig. 7** einen Arretieransatz des Rohrgehäuses.

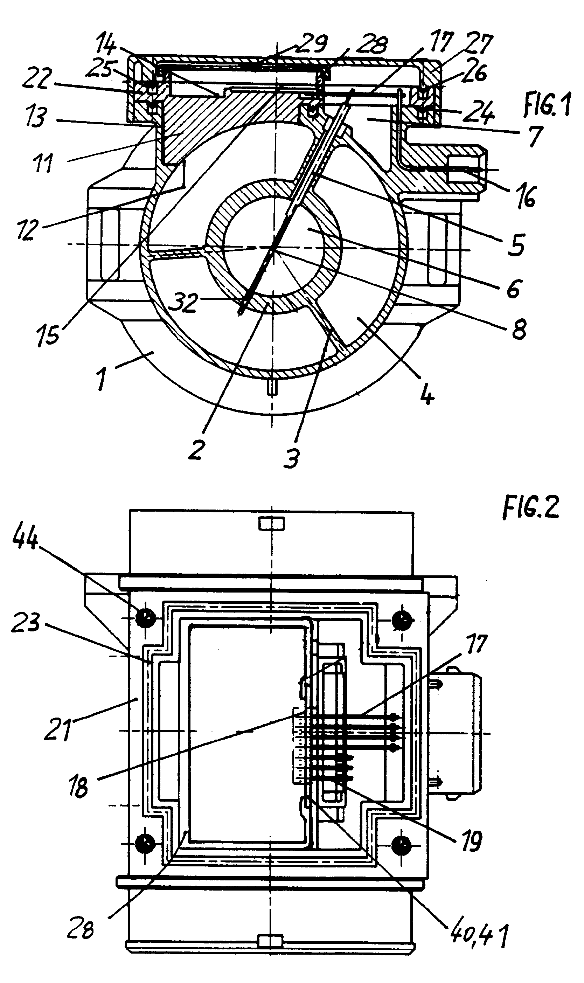

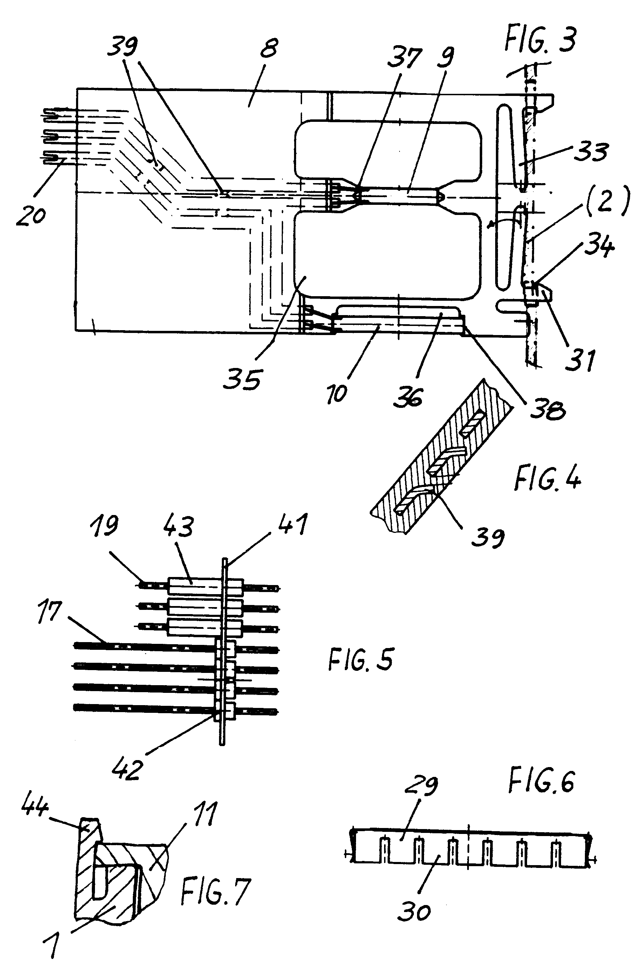

Fig. 1 zeigt ein Rohrgehäuse 1, das Teil einer nicht dargestellten Luftansaugleitung einer Brennkraftmaschine ist, mit einem Venturirohr 2, das durch Rippen 3 zentrisch in dem Rohrgehäusekanal 4 gehalten ist. Eine der Rippen 3 ist hohl und verbindet mit der so gebildeten Ausnehmung 5 den Venturirohrkanal 6 mit einer außen am Rohrgehäuse 1 ausgebildeten Kammer 7. Von dieser Kammer 7 aus ragt ein Chipträger 8 durch die Ausnehmung 5 in den Venturirohrkanal 6 hinein, der an dem in den Kanal 6 ragenden Ende zwei temperaturabhängige Widerstände 9, 10 trägt (Fig. 3), die als Halbleiterchips ausgeführt sind.

Das Rohrgehäuse 1 weist einen Metall-Kühlkörper 11 auf, der mit einem Teil 12 durch eine Ausnehmung 13 in den Rohrgehäusekanal 11 hineinragt und andererseits mit einem nach außen ragenden Teil 14 eine als Hybridschaltkreis 15 ausgeführte Regelschaltung aufnimmt. In das Rohrgehäuse 1 sind Steckerzungen 16 miteingegossen, die einerseits über Kontaktstifte 17 mit Kontakten 18 des Hybridschaltkreises 15 verbunden sind und andererseits über Leitungen mit einem nicht dargestellten Steuergerät der Brennkraftmaschine, so daß vom Luftmassenstrommesser bereitgestellte Signale in diesem Steuergerät verarbeitet werden können. Weitere Kontaktstifte 19 verbinden Leiterfahnen 20 des Chipträgers 8 mit dem Hybridschaltkreis 15 bzw. mit dessen weiteren Kontakten 18.

Die den in den Rohrgehäusekanal 4 hineinragenden Teil 12 des Kühlkörpers 11 aufnehmende Ausnehmung 13 ist durch einen Flansch 21 begrenzt, der mit einem am Kühlkörper 11 ausgebildeten Gegenflansch 22 zusammenwirkt. Der Flansch 21 ist mit einer umlaufenden Nut 23 ausgestattet, in die eine am Gegenflansch 22 angeordnete Rippe 24 im montierten Zustand hineinragt.

Die andere Seite des Gegenflansches 22 des Kühlkörpers 11 weist ebenfalls eine umlaufende Nut 25 auf, in die eine umlaufende Rippe 26 eines den Flansch 21 überragenden Rohrgehäusedeckels 27 im montierten Zustand hineinragt.

Eine durch eine Umrandung 28 gebildete Kammer des Kühlkörpers 11 nimmt den Hybridschaltkreis 15 auf und ist durch einen Metalldeckel 29 mit einer federnden Umrandung 30, die über die Umrandung 28 des Kühlkörpers 11 geschoben ist, verschlossen.

Der in Fig. 3 und 4 dargestellte Chipträger 8 ragt mit zwei Klipsarmen 31 durch Öffnungen 32 der Venturirohrwandung, ist mit dem Rohrgehäuse 1 verklipst und durch zwei federnde Ansätze 33, die beim Einklipsen einfedern, in Richtung der Anlage von Sperransätzen 34 an die äußere Venturirohrwand belastet, wobei eine genaue Positionierung des Chipträgers 8 bzw. der Chips 9, 10 im Venturirohrkanal 6 vorliegt.

Der Chipträger 8 weist in dem in den Venturikanal ragenden Teil eine rahmenbildende Ausnehmung 35 auf, über die der erste Widerstand 9 als Brücke ragt und eine stromauf oder stromab der rahmenbildenden Ausnehmung 35 angeordnete U-förmige Ausnehmung 36, über die der zweite Widerstand 10 als Brücke ragt. Die Widerstände 9, 10 sind durch Arretiernasen 37, 38 in ihrer brückenbildenden Position gehalten.
Der Chipträger 8 weist eingegossene Leiterbahnen 20 auf, die mit den Widerständen 9, 10 und dem Hybridschaltkreis 15 kontaktiert sind. Die Leiterbahnen 20 sind durch Verbindungslaschen verbunden einstückig in die Gußform eingelegt und beim Formschließen durch Gegenhalter und Meißel getrennt worden, wie aus Fig. 4 ersichtlich ist, wobei die beim Abmeißeln der Verbindungslaschen gebildeten Leiterbahnansätze 39 aus der Leiterbahnebene gedrückt sind.
Die die offene Kammer bildende Umrandung 28 weist einen Durchbruch 40 auf, der durch eine in Fig. 5 dargestellte Blechplatte 41 ausgefüllt ist, durch die die Kontaktstifte 17, 19 hindurchragen, wobei die Kontaktstifte 17, 19 durch Hohlkondensatoren 42 bzw. Isolierbuchsen 43 geführt sind, die an der Blechplatte 41 befestigt sind.

Vorteilhafterweise ist der Kühlkörper 11 durch Arretieransätze 44 des Gehäuses 1 gehalten (Fig. 7) und mit diesem verklipst und ebenso der Rohrgehäusedeckel 27 durch diese Arretieransätze 44 gehalten und mit dem Rohrgehäuse 1 verklipst (der Vorstellbarkeit wegen nicht extra dargestellt).

Die den Hybridschaltkreis 15 aufnehmende Kammer und die Nut 23 des Flansches 21 und die Nut 25 des Gegenflanschs 22 sind mit einem elastisch aushärtendem Kunststoff/Elastomer gefüllt. Hierdruch wird erreicht, daß die elektrischen/elektronischen Bauteile geschützt werden und gleichzeitig eine dauerhafte Verbindung der Bauteile Rohrgehäuse 1, Kühlkörper 11, Deckel 27 miteinander, so daß ggf. auf eine Verschraubung, Nietung oder Einrollung usw. verzichtet werden kann. Es versteht sich in diesem Zusammenhang von selbst, daß dabei den Arretieransätzen 44 nur die Funktion zukommt, in der Aushärtungsphase des Kunststoff-Elastomers zu arretieren und zu halten.

Der erfindungsgemäße Luftmassenstrommesser eignet sich für eine Großserienfertigung und ermöglicht den Einsatz des als Massenware käuflichen Halbleiterchips, wobei durch den in der hohlen Rippe 3 genau ausgerichteten Chipträger 8 und die durch Arretiernasen 37, 38 genaustens ausgerichteten Halbleiterchips 9, 10 geringste Exemplarstreuungen erreicht werden.

Die Kapselung des Hybridschaltkreises 15 durch metallische Wände sowie der Einsatz der Kondensatoren auf den Kontaktstiften bewirken geringste Störungen anderer in der Nähe befindlicher elektrischer/elektronischer Bauteile und umgekehrt sichern die Schaltung auch gegen Beeinflussung durch diese Bauteile, z. B. der Zündspule.

## Patentansprüche

1. Luftmassenstrommesser in der Luftansaugleitung einer Brennkraftmaschine, gebildet aus einem einen Abschnitt der Ansaugleitung bildenden Rohrgehäuse (1) einem im Rohrgehäuse (1) angeordneten Venturirohr (2), das einstückig mit dem Rohrgehäuse (1) ausgeführt und über Rippen (3) zentrisch im Kanalabschnitt (4) des Rohrgehäuses (1) gehalten ist, wobei eine dieser Rippen (3) hohl ausgeführt ist und eine so gebildete Ausnehmung (5) den Venturirohrkanal (6) mit einer von einem Rohrgehäusedeckel (27) verschlossenen Kammer (7) verbindet und in die Ausnehmung (5) ein Widerstandsträger (8) eingesetzt ist, auf dem zwei Widerstände (9, 10) angeordnet sind und in den Venturirohrkanal (6) hineinragen, von denen bei einem die Temperatur und/oder der Widerstand durch eine elektrische Regelschaltung geregelt wird und die Stellgröße ein Maß für den Massenstrom ist, und der zweite Widerstand zur Temperaturkompensation dient, dadurch gekennzeichnet, daß ein Metall-Kühlkörper (16) vorgesehen ist, der einerseits in das Rohrgehäuse (1) bzw. den Rohrkanal hineinragt und andererseits mit dem nach außen ragenden Teil die Regelschaltung aufnimmt, die über Steckerzungen nach außen geführt ist, die Regelschaltung als Hybridschaltkreis (15) ausgeführt ist und die Widerstände (9, 10) als Halbleiterchips ausgeführt und auf einem Kunststoffchipträger (8) angeordnet sind, der mit zwei Klipsarmen (31) durch Öffnungen (32) der Venturirohrwandung ragt und verklipst ist.

2. Luftmassenstrommesser nach Anspruch 1, dadurch gekennzeichnet, daß der Chipträger (8) durch ein oder zwei fedemde Ansätze (33), die beim Einklipsen einfedem, in Richtung der Anlage von Sperransätzen (34) an die äußere Venturirohrwand belastet ist.

3. Luftmassenstrommesser nach Anspruch 1 oder 2, dadurch gekennzeichnet, daß der Chipträger (8) in dem in den Venturirohrkanal (6) ragenden Teil eine rahmenbildende Ausnehmung (35) aufweist, über die der erste Widerstand (9) als Brücke ragt.

4. Luftmassenstrommesser nach Anspruch 3, dadurch gekennzeichnet, daß der Chipträger (8) in dem in den Venturirohrkanal (6) hineinragenden Teil eine stromauf oder stromab der rahmenbildenden Ausnehmung (35) angeordnete U-förmige Ausnehmung (36) aufweist, über die der zweite Wderstand (10) als Brücke ragt.

5. Luftmassenstrommesser nach einem der Ansprüche 3 oder 4, dadurch gekennzeichnet, daß die Widerstände (9, 10) durch Arretiemasen (37, 38) in ihrer brückenbildenden Position gehalten sind.

6. Luftmassenstrommesser nach einem der vorstehenden Ansprüche, dadurch gekennzeichnet, daß der Chipträger (8) eingegossene Leiterbahnen (20) aufweist, die mit den Widerständen (9, 10) und dem Hybridschaltkreis (15) kontaktiert sind.

7. Luftmassenstrommesser nach Anspruch 6, dadurch gekennzeichnet, daß die Leiterbahnen (20) durch Verbindungslaschen verbunden einstückig in die Gußform eingelegt und beim Formschließen durch Gegenhalter und Meißel getrennt werden.

8. Luftmassenstrommesser nach Anspruch 7, dadurch gekennzeichnet, daß die beim Abmeißeln der Verbindungslaschen gebildeten Leiterbahnansätze (39) aus der Leiterbahnebene gedrückt sind.

9. Luftmassenstrommesser nach einem der vorstehenden Ansprüche, dadurch gekennzeichnet, daß der Kühlkörper (11) auf dem nach außen ragenden Teil (14) eine eine offene Kammer bildende Umrandung (28) aufweist, die den Hybridschaltkreis (15) umfaßt.

10. Luftmassenstrommesser nach Anspruch 9, dadurch gekennzeichnet, daß die Umrandung (28) einen Durchbruch (40) aufweist, der durch eine Blechplatte (41) ausgefüllt wird, durch die Kontaktstifte (17, 19) hindurchragen, die mit dem Hybridschaltkreis (15) und den Leiterbahnen (20) des Chipträgers (8) bzw. mit den aus dem Rohrgehäuse (1) herausgeführten Steckerzungen (16) kontaktiert sind.

11. Luftmassenstrommesser nach Anspruch 10, dadurch gekennzeichnet, daß die Kontaktstifte (17, 19) durch Hohlkondensatoren (42) bzw. Isolierbuchsen (43) geführt sind, die an der Blechplatte (41) befestigt sind.

12. Luftmassenstrommesser nach Anspruch 10 oder 11, dadurch gekennzeichnet, daß die durch die Umrandung (28) gebildete Kammer durch einen Metalldeckel (29) verschlossen ist.

13. Luftmassenstrommesser nach Anspruch 12, dadurch gekennzeichnet, daß der Metalldeckel (29) eine federmde Umrandung (30) aufweist, die über die Umrandung (28) des Kühlkörpers (11) geschoben ist.

14. Luftmassenstrommesser nach einem der vorstehenden Ansprüche, dadurch gekennzeichnet, daß die den in den Rohrgehäusekanal (4) hineinragende Teil (12) des Kühlkörpers (11) aufnehmende Ausnehmung (13) durch einen Flansch (21) begrenzt ist, der mit einem am Kühlkörper (11) ausgebildeten Gegenflansch (22) zusammenwirkt.

15. Luftmassenstrommesser nach Anspruch 14, dadurch gekennzeichnet, daß Flansch (21) oder Gegenflansch (22) mit einer umlaufenden Nut (23) oder Rippe (24) ausgestattet sind, wobei im montierten Zustand die Rippe (24) in die Nut (23) hineinragt.

16. Luftmassenstrommesser nach Anspruch 15, dadurch gekennzeichnet, daß der Kühlkörper (11) durch Arretieransätze (44) des Rohrgehäuses (1) gehalten und mit dem Rohrgehäuse (1) verklipst ist.

17. Luftmassenstrommesser nach Anspruch 16, dadurch gekennzeichnet, daß der Rohrgehäusedeckel (27) durch die Arretieransätze (44) gehalten und mit dem Rohrgehäuse (1) verklipst ist.

18. Luftmassenstrommesser nach Anspruch 17, dadurch gekennzeichnet, daß der Kühlkörper-Gegenflansch (22) auf der zum Deckel (27) gerichteten Fläche oder der Rohrgehäusedeckel (27) mit einer umlaufenden Nut (25) oder Rippe (26) ausgestattet ist, wobei im montierten Zustand die Rippe (26) in die Nut (25) hineinragt.

19. Luftmassenstrommesser nach einem der Ansprüche 10 - 18, dadurch gekennzeichnet, daß die den Hybridschaltkreis (15) aufnehmende Kammer und/oder die Nut (23) des Flanschs (21) bzw. Gegenflanschs (22) und/oder die Nut (25) der anderen Fläche des Gegenflanschs (22) bzw. des Deckels (27) mit einem elastisch aushärtenden Kunststoff-Elastomer gefüllt sind.

## Claims

1. An air mass flow meter in the air suction line of an internal combustion engine, formed by a tubular housing (1) forming a section of the suction line, a Venturi tube (2), which is arranged in the tubular housing (1), is integrally constructed with the tubular housing (1) and is held via ribs (3) centrally in the duct section (4) of the tubular housing (1), one of the said ribs (3) being hollow and a recess (5) formed in this way connecting the Venturi tube duct (6) with a chamber (7) sealed by a tubular housing lid (27), and a resistor support (8) being inserted into the recess (5), two resistors (9, 10) being arranged on the said support (8) and projecting into the Venturi tube duct (6), the temperature and/or resistance being controlled in one of the resistors by an electrical control circuit and the adjustment value being a measure for the mass flow, and the second resistor being used for temperature compensation, characterised in that a metal cooling element (16) is provided, which on the one hand projects into the tubular housing (1) or tube duct and on the other hand with its outwardly projecting section accommodates the control circuit which is guided towards the outside via plug tongues, the control circuit is constructed as a hybrid circuit (15) and the resistors (9, 10) are constructed as semi-conductor chips and are arranged on a plastics material chip support (8), which projects with two clip arms (31) through apertures (32) in the Venturi tube wall and is clipped in place.

2. An air mass flow meter according to claim 1, characterised in that the chip support (8) is loaded in the direction of the abutment of locking extensions (34) against the outer Venturi tube wall by one or two resilient extensions (33), which are elastically inwardly deformed during clipping.

3. An air mass flow meter according to claim 1 or 2, characterised in that, in its section projecting into the Venturi tube duct (6), the chip support (8) comprises a frame-forming recess (35), over which the first resistor (9) projects as a bridge.

4. An air mass flow meter according to claim 3, characterised in that, in its section projecting into the Venturi tube duct (6), the chip support (8) comprises a U-shaped recess (36), which is arranged upstream or downstream of the frame-forming recess (35) and over which the second resistor (10) projects as a bridge.

5. An air mass flow meter according to claim 3 or 4, characterised in that the resistors (9, 10) are held in their bridge-forming position by locking noses (37, 38).

6. An air mass flow meter according to one of the preceding claims, characterised in that the chip support (8) comprises pre-moulded conductor paths (20), which are contacted with the resistors (9, 10) and the hybrid circuit (15).

7. An air mass flow meter according to claim 6, characterised in that the conductor paths (20), connected by connecting brackets, are inserted into the mould as a unit and are separated during mould closure by hammer and chisel.

8. An air mass flow meter according to claim 7, characterised in that the conductor path extensions (39) formed when the connecting brackets are chiselled away are pressed out of the conductor path plane.

9. An air mass flow meter according to one of the preceding claims, characterised in that, on its outwardly projecting section (14), the cooling element (11) comprises a border (28) which forms an open chamber and encloses the hybrid circuit (15).

10. An air mass flow meter according to claim 9, characterised in that the border (28) comprises an aperture (40), which is filled by a sheet metal plate (41), through which contact pins (17, 19) project, which are contacted with the hybrid circuit (15) and the conductor paths (20) of the chip support (8) or with the plug tongues (16) guided out of the tubular housing (1).

11. An air mass flow meter according to claim 10, characterised in that the contact pins (17, 19) are guided through hollow condensers (42) or insulating bushings (43), which are secured to the sheet metal plate (41).

12. An air mass flow meter according to claim 10 or 11, characterised in that the chamber formed by the border (28) is sealed by a metal lid (29).

13. An air mass flow meter according to claim 12, characterised in that the metal lid (29) comprises a resilient border (30), which is pushed over the border (28) of the cooling element (11).

14. An air mass flow meter according to one of the preceding claims, characterised in that the recess (13) accommodating the section (12) of the cooling element (11) projecting into the tubular housing duct (4) is defined by a flange (21), which cooperates with a counter flange (22) formed on the cooling element (11).

15. An air mass flow meter according to claim 14, characterised in that the flange (21) or counter flange (22) is provided with a circumferential groove (23) or rib (24), the rib (24) projecting into the groove (23) in the assembled state.

16. An air mass flow meter according to claim 15, characterised in that the cooling element (11) is held by locking extensions (44) of the tubular housing (1) and is clipped to the tubular housing (1).

17. An air mass flow meter according to claim 16, characterised in that the tubular housing lid (27) is held by the locking extensions (44) and is clipped to the tubular housing (1).

18. An air mass flow meter according to claim 17, characterised in that the tubular housing lid (27) or the cooling element counter flange (22) on its surface facing the lid (27) is provided with a circumferential groove (25) or rib (26), the rib (26) projecting into the groove (25) in the assembled state.

19. An air mass flow meter according to one of claims 10 to 18, characterised in that the chamber accommodating the hybrid circuit (15) and/or the groove (23) of the flange (21) or counter flange (22) and/or the groove (25) of the other surface of the counter flange (22) or of the lid (27) is/are filled with an elastically hardening plastics material elastomer.

## Revendications

1. Débitmètre massique d'air dans la conduite d'aspiration d'air d'un moteur à combustion interne, composé d'un carter tubulaire (1) formant une section de la conduite d'aspiration, d'un venturi (2) disposé dans le carter tubulaire (1), réalisé d'une seule pièce avec le carter (1), maintenu et centré par des ailettes (3) dans la section de canal (4) du carter tubulaire (1), l'une de ces ailettes (3) ayant une réalisation creuse et une cavité (5), ainsi formée, reliant le canal de venturi (6) à un compartiment (7), fermé par un couvercle (27) du carter tubulaire, un support de résistances (8), sur lequel sont disposées deux résistances (9, 10) qui pénètrent dans le canal de venturi (6), étant logé dans la cavité (5), la température et/ou la résistance étant réglée par un circuit de régulation électrique sur l'une de ces résistances, et la variable réglante étant une mesure du débit-masse, et la seconde résistance servant à la compensation de température, caractérisé en ce qu'un corps de refroidissement métallique (16), prévu, pénétre dans le carter tubulaire (1) et/ou le canal tubulaire, d'une part, reçoit le circuit de régulation par la partie dirigée vers l'extérieur, d'autre part, ce circuit étant guidé vers l'extérieur par l'intermédiaire de lames de contact, en ce que le circuit de régulation est réalisé sous forme de circuit hybride (15), les résistances (9, 10) étant réalisées sous forme de puces semiconductrices et étant disposées sur un porteur de puces en matière plastique (8), qui pénètre par deux bras de clips (31) au travers d'ouvertures (32) de la paroi du venturi et est fixé par clipsage.

2. Débitmètre massique d'air suivant la revendication 1, caractérisé en ce que le porteur de puces (8) est sollicité par un ou deux éléments élastiques (33), qui se rabattent lors du clipsage, dans le sens de l'appui d'éléments de blocage (34) sur la paroi externe du venturi.

3. Débitmètre massique d'air suivant l'une des revendications 1 ou 2, caractérisé en ce que le porteur de puces (8) présente, dans la partie pénétrant dans le canal de venturi (6), une cavité (35) formant un cadre, traversée en pont par la première résistance (9).

4. Débitmètre massique d'air suivant la revendication 3, caractérisé en ce que le porteur de puces (8) présente, dans la partie pénétrant dans le canal de venturi (6), une cavité en U (36) disposée en amont ou en aval de la cavité (35) formant un cadre, et traversée en pont par la seconde résistance (10).

5. Débitmètre massique d'air suivant l'une quelconque des revendications 3 ou 4, caractérisé en ce que les résistances (9, 10) sont maintenues par des ergots d'arrêt (37, 38) dans leur position formatrice d'un pont.

6. Débitmètre massique d'air suivant l'une quelconque des revendications précédentes, caractérisé en ce que le porteur de puces (8) présente des pistes conductives (20) coulées, qui sont mises en contact avec les résistances (9, 10) et le circuit hybride (15).

7. Débitmètre massique d'air suivant la revendication 6, caractérisé en ce que les pistes conductives (20), assemblées par des éclisses de jonction, sont insérées d'une seule pièce dans le moule, et sont séparées par des contre-bouterolles et ciseaux lors de la fermeture du moule.

8. Débitmètre massique d'air suivant la revendication 7, caractérisé en ce que les éléments de pistes conductives (39), formés lors de l'enlèvement au ciseau des éclisses de jonction, sont repoussés du plan des pistes.

9. Débitmètre massique d'air suivant l'une quelconque des revendications précédentes, caractérisé en ce que le corps de refroidissement (11) présente, sur la partie (14) dirigée vers l'extérieur, une bordure (28) formant un compartiment ouvert, qui renferme le circuit hybride (15).

10. Débitmètre massique d'air suivant la revendication 9, caractérisé en ce que la bordure (28) présente une ouverture (40) garnie d'une plaque de tôle (41), que traversent des broches (17, 19) mises en contact avec le circuit hybride (15) et les pistes conductives (20) du porteur de puces (8) et/ou avec les lames de contact (16) guidées à l'extérieur du carter tubulaire (1).

11. Débitmètre massique d'air suivant la revendication 10, caractérisé en ce que les broches (17, 19) sont guidées au travers de condensateurs creux (42) et/ou de douilles isolantes (43), fixés sur la plaque de tôle (41).

12. Débitmètre massique d'air suivant l'une des revendications 10 ou 11, caractérisé en ce que le compartiment, formé par la bordure (28), est fermé par un couvercle métallique (29).

13. Débitmètre massique d'air suivant la revendication 12, caractérisé en ce que le couvercle métallique (29) présente une bordure élastique (30), poussée sur la bordure (28) du corps de refroidissement (11).

14. Débitmètre massique d'air suivant l'une quelconque des revendications précédentes, caractérisé en ce que la cavité (13), recevant la partie (12) du corps de refroidissement (11) qui pénètre dans le canal (4) du carter tubulaire, est délimitée par une bride (21), qui concourt avec une contre-bride (22) réalisée sur le corps de refroidissement (11).

15. Débitmètre massique d'air suivant la revendication 14, caractérisé en ce que la bride (21) ou la contre-bride (22) sont dotées d'une rainure (23) ou nervure (24) périphériques, la nervure (24) pénétrant dans la rainure (23) à l'état de montage.

16. Débitmètre massique d'air suivant la revendication 15, caractérisé en ce que le corps de refroidissement (11) est maintenu par des éléments d'arrêt (44) du carter tubulaire (1), sur lequel il est fixé par clipsage.

17. Débitmètre massique d'air suivant la revendication 16, caractérisé en ce que le couvercle (27) du carter tubulaire est maintenu par les éléments d'arrêt (44) et est fixé par clipsage sur le carter (1).

18. Débitmètre massique d'air suivant la revendication 17, caractérisé en ce que la contre-bride (22) du corps de refroidissement, sur la surface dirigée vers le couvercle (27), ou le couvercle (27) du corps tubulaire, sont équipés d'une rainure (25) ou nervure (26) périphériques, la nervure (26) pénétrant dans la rainure (25) à l'état de montage.

19. Débitmètre massique d'air suivant l'une quelconque des revendications 10 à 18, caractérisé en ce que le compartiment recevant le circuit hybride (15), et/ou la rainure (23) de la bride (21) et/ou de la contre-bride (22), et/ou la rainure (25) de l'autre surface de la contre-bride (22) et/ou du couvercle (27), sont garnis d'un élastomère/matière plastique durcissant élastiquement.
